# EUROPÄISCHE PATENTSCHRIFT

(11) **EP 3 296 602 B1**
(45) Veröffentlichungstag und Bekanntmachung des Hinweises auf die Patenterteilung: **12.06.2019**
(21) Anmeldenummer: 17185573.7
(22) Anmeldetag: 09.08.2017
(51) Int. Cl.: F16K 27/00, F15B 13/08

(54) **FLUIDVERTEILERVORRICHTUNG**
FLUID DISTRIBUTION APPARATUS
DISPOSITIF DE DISTRIBUTION DE FLUIDE

(30) Priorität: 14.09.2016 DE 102016217506
(43) Veröffentlichungstag der Anmeldung: 21.03.2018
(73) Patentinhaber: FESTO AG & Co. KG, 73734 Esslingen (DE)
(72) Erfinder: Trautwein, Ulrich, 73265 Dettingen/Teck (DE)
(74) Vertreter: Patentanwälte Magenbauer & Kollegen Partnerschaft mbB

(56) Entgegenhaltungen:
- EP-A2- 2 412 985
- US-B1- 8 307 854
- US-B2- 7 344 271

## Beschreibung

Die Erfindung betrifft eine Fluidverteilervorrichtung, mit einem modular aufgebauten Ventilträger, der von einem von Fluid durchströmbaren Ventilträger-Kanalsystem durchsetzt ist und über mehrere Ventilträgermodule verfügt, die in einer Aufreihungsrichtung aneinandergereiht sind und jeweils über einen Trägerkörper verfügen, der eine Bestückungsfläche aufweist, die mindestens einen Bestückungsplatz zur Bestückung mit einem Ventil definiert, wobei das Ventilträger-Kanalsystem mit jeweils mehreren zur Verbindung mit einem Ventil vorgesehenen Kanalmündungen an jedem Bestückungsplatz zur Bestückungsfläche ausmündet und mehrere den Ventilträger axial durchsetzende Durchgangskanäle aufweist, die jeweils über eine Kanalmündung an jedem Bestückungsplatz jedes Trägerkörpers ausmünden, wobei die Kanalmündungen an jedem Bestückungsplatz unter Bildung eines Mündungsmusters verteilt angeordnet sind.

In der EP 2 412 985 A2 ist eine derartige Fluidverteileranordnung offenbart, die eine Modulbaugruppe aufweist, welche sich aus mehreren in einer Aufreihungsrichtung aneinandergereihten und durch Schraubverbindungen miteinander verbundenen Verteilermodulen zusammensetzt, wobei ein erstes Verteilermodul mit einem zweiten Verteilermodul mittels eines Adapterelementes verschraubt ist, das im aneinander angesetzten Zustand der beiden Verteilermodule in eine Ausnehmung des zweiten Verteilermoduls eintaucht und das mittels einer das zweite Verteilermodul durchsetzenden Verbindungsschraube mit dem zweiten Verteilermodul verspannbar ist. Die Verteilermodule haben jeweils eine Bestückungsfläche, die entweder nur einen Bestückungsplatz oder zwei nebeneinander angeordnete Bestückungsplätze definiert, wobei die Verteilermodule an jedem Bestückungsplatz mit einem zur Steuerung von Fluidströmen dienenden Ventil bestückbar sind.

Aus der US 7 344 271 B1 ist eine Fluidverteileranordnung bekannt, die mehrere aneinander angesetzte Ventilträgermodule aufweist, wobei ein Ventilträgermodul zur Bestückung mit einem einzigen Ventil und ein weiteres Ventilträgermodul zur Bestückung mit zwei Ventilen ausgebildet ist.

Die US 8 307 854 B1 beschreibt eine Fluidverteilervorrichtung, die mehrere aneinandergereihte Fluidströmungssubstrate aufweist, die von Fluidkanälen durchsetzt sind. Jedes Fluidströmungssubstrat hat eine Komponentenbefestigungsfläche, an der sich mehrere Kanalmündungen der Fluidkanäle befinden und die mit mindestens einer Fluidverarbeitungkomponente, zum Beispiel einem Ventil, bestückt ist.

Der Erfindung liegt die Aufgabe zu Grunde, Maßnahmen zu treffen, die eine flexiblere Einsatzmöglichkeit der Fluidverteilervorrichtung ermöglichen.

Zur Lösung der Aufgabe ist in Verbindung mit den eingangs genannten Merkmalen vorgesehen, dass mindestens ein Ventilträgermodul ein Hybrid-Ventilträgermodul ist, dessen Trägerkörper einen Hybrid-Trägerkörper bildet, dessen Bestückungsfläche zwei in der Aufreihungsrichtung nebeneinander angeordnete Bestückungsplätze definiert, die sich im Mündungsmuster der an ihnen angeordneten Kanalmündungen voneinander unterscheiden.

Auf diese Weise ist mindestens ein Ventilträgermodul als ein Hybrid-Ventilträgermodul ausgebildet, dessen als Hybrid-Trägerkörper bezeichneter Trägerkörper eine Bestückungsfläche aufweist, die mit zwei sich zum Beispiel in ihrer Baugröße voneinander unterscheidenden Ventilen bestückbar ist, die beispielsweise unterschiedlich große Fluidvolumenströme steuern können, vorzugsweise zur Ansteuerung von mit der Fluidverteilervorrichtung verbundenen Verbrauchern. Die Möglichkeit zur Bestückung des Hybrid-Ventilträgermoduls mit unterschiedlich gestalteten Ventilen beruht darauf, dass sich die Mündungsmuster der an den beiden Bestückungsplätzen des Hybrid-Trägerkörpers angeordneten Kanalmündungen voneinander unterscheiden. Die Ventile verfügen jeweils an einer zur Montage an einem Trägerkörper vorgesehenen Montagefläche über ein von Kanalmündungen ihrer Ventilkanäle gebildetes Mündungsmuster, wobei diese Mündungsmuster bei unterschiedlich gestalteten und insbesondere bei unterschiedlich dimensionierten Ventilen unterschiedlich ausfallen. Indem die Mündungsmuster der beiden Bestückungsplätze des Hybrid-Trägerkörpers auf die unterschiedlichen Mündungsmuster der Kanalmündungen der zu montierenden Ventile abgestimmt sind, können zwei unterschiedlich gestaltete Ventile ohne Verwendung eines Adapters an ein und demselben als Hybrid-Ventilträgermodul bezeichneten Ventilträgermodul montiert werden. Beispielsweise kann durch ein am Hybrid-Trägerkörper montiertes größeres Ventil ein größerer Fluidvolumenstrom als durch ein am gleichen Hybrid-Trägerkörper montiertes kleineres Ventil strömen, wodurch angeschlossene Verbraucher mit verschieden großen Fluidvolumenströmen bedarfsgerecht über ein und denselben Ventilträger versorgt werden können. Die Fluidverteilervorrichtung ist somit insgesamt sehr flexibel einsetzbar.

Es ist vorteilhaft, dass das Ventilträger-Kanalsystem mehrere den Ventilträger axial durchsetzende Durchgangskanäle aufweist, die jeweils über eine Kanalmündung an jedem Bestückungsplatz jedes Trägerkörpers ausmünden. Hierdurch wird erreicht, dass jedes an einem Ventilträgermodul angeordnete Ventil über die Kanalmündungen eines Bestückungsplatzes zentral mit Fluid versorgt werden kann und bei Bedarf auch eine gesammelte Fluidabfuhr möglich ist.

Der Hybrid-Trägerkörper jedes Hybrid-Ventilträgermoduls verfügt über eine Bestückungsfläche, die zwei in der Aufreihungsrichtung der Ventilträgermodule nebeneinander liegende Bestückungsplätze definiert, wobei der eine Bestückungsplatz beispielsweise über mehrere mit einem gleichen Abstand zueinander angeordnete Kanalmündungen verfügt, die ein erstes Mündungsmuster bilden. Der zweite Bestückungsplatz verfügt beispielsweise über eine gleiche Anzahl von Kanalmündungen, die ein sich von dem ersten Mündungsmuster unterscheidendes zweites Mündungsmuster bilden, indem sie zum Beispiel mit einem nur halb so großen Abstand zueinander angeordnet sind, wie die Kanalmündungen des ersten Mündungsmusters. An das Mündungsmuster des ersten Bestückungsplatzes kann daher beispielsweise ein Ventil einer größeren Baureihe montiert werden als an das Mündungsmuster des zweiten Bestückungsplatzes.

An das mindestens eine Hybrid-Ventilträgermodul können in der Aufreihungsrichtung ein oder mehrere weitere Ventilträgermodule angereiht sein, so dass der Ventilträger der Fluidverteilervorrichtung in der Aufreihungsrichtung mehr oder weniger lang ist und mit einer unterschiedlichen Anzahl von Ventilen bestückbar ist. Durch den modularen Aufbau des Ventilträgers kann die Länge des Ventilträgers bedarfsgerecht sehr variabel gewählt werden.

Das Ventilträger-Kanalsystem durchsetzt vorzugsweise alle miteinander zur Bildung des Ventilträgers verbundenen Ventilträgermodule, d.h. sowohl das mindestens eine Hybrid-Ventilträgermodul als auch eventuelle weitere, nicht in Hybridtechnologie ausgeführte Ventilträgermodule, die nur einen einzigen Bestückungsplatz oder mehrere über ein gleiches Mündungsmuster von Kanalmündungen verfügende Bestückungsplätze aufweisen. Solche nicht in der erfindungsgemäßen Hybridtechnologie ausgeführten Ventilträgermodule seien im Folgenden auch als Standard-Ventilträgermodule bezeichnet. Mit jeweils mehreren zur Verbindung mit einem Ventil vorgesehenen Kanalmündungen mündet das Ventilträger-Kanalsystem an jedem Bestückungsplatz der Ventilträgermodule aus. Dabei sind die Kanalmündungen an jedem Bestückungsplatz zueinander beabstandet in einem als Mündungsmuster bezeichneten gewissen Muster angeordnet. Durch das Ventilträger-Kanalsystem und die an dem Ventilträger montierten Ventile strömt im Betrieb der Fluidverteileranordnung ein Fluid, bei dem es sich vorzugsweise um Druckluft oder auch um eine Druckflüssigkeit handelt.

Vorteilhafte Weiterbildungen gehen aus den Unteransprüchen hervor.

Es ist vorteilhaft, wenn sich die Kanalmündungen der Mündungsmuster der beiden Bestückungsplätze des Hybrid-Trägerkörpers in ihren Relativpositionen und/oder in ihren Querschnittsflächen voneinander unterscheiden, derart, dass die beiden Bestückungsplätze mit unterschiedlichen Ventilen bestückbar sind. Hierdurch wird erreicht, dass Ventile unterschiedlichen Aufbaus und insbesondere unterschiedlicher Baugrößen an die Kanalmündungen der Mündungsmuster der Bestückungsplätze montierbar sind. Ventile unterschiedlicher Baugrößen unterscheiden sich voneinander insbesondere durch ihre internen Ventilkanalquerschnitte und somit durch die Fluidvolumenströme, die sie steuern und zu einem Verbraucher leiten können und daraus resultierend durch die Mündungsmuster der an ihren Montageflächen vorhandenen Kanalmündungen, deren Relativpositionen zueinander unterschiedlich sein können.

Die bedarfsgerechte Versorgung der Ventile mit Fluid wird vorzugsweise erreicht, indem die Querschnittsflächen der Kanalmündungen der Bestückungsplätze des Hybrid-Ventilträgers entsprechend angepasst werden. Beispielsweise sind die Querschnittsflächen der zu einem Mündungsmuster des einen Bestückungsplatzes gehörenden Kanalmündungen relativ groß, so dass ein relativ großer Fluidvolumenstrom über die Querschnittsflächen zu einem großen Ventil strömen kann, während die Querschnittsflächen der Kanalmündungen des Mündungsmusters des anderen Bestückungsplatzes relativ klein sind, so dass ein relativ kleiner Fluidvolumenstrom über die Querschnittsflächen zu einem relativ kleinen Ventil strömen kann. Durch die Querschnittsflächen der Kanalmündungen der Mündungsmuster kann folglich mehr oder weniger Fluid strömen, so dass durch die Anpassung der Querschnittsflächen der von den Ventilen steuerbare Fluidvolumenstrom bestimmt wird. Der Unterschied zwischen den Relativpositionen der Kanalmündungen eines Mündungsmusters des Hybrid-Ventilträgers von den Kanalmündungen des anderen Mündungsmusters erlaubt die Montage von Ventilen, die sich beispielsweise in ihrer Baugröße oder in ihrer Bauart, zum Beispiel Schieberventil oder Sitzventil, voneinander unterschieden.

Es ist vorteilhaft, wenn der Mittenabstand zwischen den zum gleichen Mündungsmuster gehörenden Kanalmündungen des einen Bestückungsplatzes des Hybrid-Ventilträgermoduls größer ist als der Mittenabstand zwischen den zum gleichen Mündungsmuster gehörenden Kanalmündungen des anderen Bestückungsplatzes des Hybrid-Ventilträgermoduls. Der Mittenabstand bezeichnet den zwischen einer geometrischen Mitte einer Kanalmündung und einer geometrischen Mitte einer anderen Kanalmündung gemessenen Abstand, wobei die geometrische Mitte vorzugsweise die Position des geometrischen Mittelpunkts der jeweiligen Kanalmündung einnimmt, wenn die Kanalmündung kreisförmig ist. Durch diese Gestalt wird erreicht, dass die Kanalmündungen des einen Bestückungsplatzes des Hybrid-Ventilträgermoduls beispielsweise mit den Kanalmündungen eines relativ großen Ventils übereinstimmen, so dass dieses Ventil auf dem Bestückungsplatz montiert werden kann. Die Kanalmündungen des anderen Bestückungsplatzes stimmen vorzugsweise mit den Kanalmündungen eines in Bezug auf das große Ventil kleineren Ventils überein, so dass auf diesem Bestückungsplatz das kleinere Ventil angeordnet werden kann.

Es ist vorteilhaft, wenn das Mündungsmuster der Kanalmündungen eines Bestückungsplatzes des Hybrid-Trägerkörpers mit mindestens einem Mündungsmuster der Kanalmündungen des Trägerkörpers mindestens eines am Hybrid-Ventilträgermodul in der Aufreihungsrichtung angereihten weiteren Ventilträgermoduls übereinstimmt, wobei die Übereinstimmung zweckmäßigerweise mit sämtlichen Mündungsmustern aller weiteren Ventilträgermodule gegeben ist. Hierdurch wird erreicht, dass am Hybrid-Ventilträgermodul mindestens ein Ventil montiert oder montierbar ist, dessen Bauart und/oder Baugröße mit den Ventilen der an den übrigen Ventilträgermodulen montierten Ventilen übereinstimmt. Zweckmäßigerweise stimmen alle montierten Ventile, mit Ausnahme eines der beiden am Hybrid-Ventilträgermodul angeordneten Ventile, in ihrer Baugröße überein, so dass der Ventilträger der Fluidverteilervorrichtung über genau ein Ventil verfügt, dass in seiner Bauart und/oder Baugröße von den restlichen am Ventilträger montierten Ventilen abweicht.

Es ist vorteilhaft, wenn der Trägerkörper mindestens eines Ventilträgermoduls über zwei in der Aufreihungsrichtung nebeneinander angeordnete, in ihren Mündungsmustern übereinstimmende Bestückungsplätze verfügt. Hierdurch wird erreicht, dass an einem Ventilträgermodul zwei Ventile gleicher Bauart und/oder Baugröße montiert oder montierbar sind, so dass der Ventilträger durch die Anordnung eines solchen Ventilträgermoduls um zwei identische Ventile erweitert werden kann, was den Aufbau der Fluidverteilervorrichtung besonders schnell und einfach macht. Wie schon erwähnt, soll ein solches Ventilträgermodul zu besseren Unterscheidung auch als Standard-Ventilträgermodul bezeichnet werden.

Es ist vorteilhaft, wenn die Kanalmündungen der Mündungsmuster sämtlicher Bestückungsplätze einschließlich derjenigen des mindestens einen Hybrid-Trägerkörpers in symmetrischer Verteilung, insbesondere spiegelsymmetrisch, beidseits einer Bezugsebene angeordnet sind, die entlang der Aufreihungsrichtung und entlang einer orthogonal zu den Bestückungsflächen orientierten Hochachse des Ventilträgers verläuft. Hierdurch wird insbesondere erreicht, dass die Mündungsmuster aller Bestückungsplätze besonders einfach mit dem internen Ventilträger-Kanalsystem verbunden werden können.

Es ist vorteilhaft, wenn jeder Bestückungsplatz der Trägerkörper über eine elektromechanische Schnittstelleneinrichtung verfügt, die zur Verbindung mit einer elektrischen Betätigungseinrichtung eines am zugeordneten Bestückungsplatz montierten oder montierbaren Ventils vorgesehen ist. Bevorzugt weisen die elektromechanischen Schnittstelleneinrichtungen der beiden Bestückungsplätze des Hybrid-Trägerkörpers einen unterschiedlichen Abstand zu einer die Mündungsmuster dieser beiden Bestückungsplätze durchsetzenden Bezugsebene auf, die entlang der Aufreihungsrichtung und entlang einer orthogonal zu den Bestückungsflächen orientierten Hochachse des Ventilträgers verläuft. Die elektromechanischen Schnittstelleneinrichtungen der Bestückungsplätze ermöglichen eine elektrische Verbindung zwischen einerseits einer Betätigungseinrichtung eines an einem Bestückungsplatz angeordneten Ventils und andererseits einer vorzugsweise am Ventilträger angeordneten elektronischen Steuereinrichtung, die beispielsweise ihrerseits mit einer übergeordneten Steuerungseinheit kommuniziert. Dadurch besteht die Möglichkeit jedes einzelne Ventil über seine Betätigungseinrichtung zu einer gezielten Beeinflussung des durch die Fluidverteilervorrichtung strömenden Fluides anzusteuern. Die elektrische Kommunikation erfolgt zweckmäßigerweise über einen im Innern des Ventilträgers angeordneten Signalübertragungsstrang, beispielsweise in Form einer Platinenanordnung oder eines flexiblen Kabelstranges.

Es ist vorteilhaft, wenn das Ventilträger-Kanalsystem pro Bestückungsplatz jedes Ventilträgermoduls mindestens einen individuellen Arbeitskanal aufweist, der einerseits am zugeordneten Bestückungsplatz des betreffenden Trägerkörpers zur Bestückungsfläche und andererseits zu einer abseits der Bestückungsfläche des Trägerkörpers angeordneten Außenfläche ausmündet. Jeder Arbeitskanal bildet an einem Bestückungsplatz und der Außenfläche des Trägerkörpers eine Kanalmündung aus. Ein am Bestückungsplatz des Trägerkörpers montiertes Ventil weist an seiner Montagefläche eine Kanalmündung auf, die mit der Kanalmündung des Arbeitskanals fluchtet, so dass Fluid vom Ventil zum Arbeitskanal und zurück strömen kann. An der an der Außenfläche des Trägerkörpers angeordneten Kanalmündung des Arbeitskanals ist ein Verbraucher über eine Fluidleitung anschließbar.

Es ist vorteilhaft, wenn der Ventilträger genau ein Hybrid-Ventilträgermodul aufweist, das ein die Reihe von Ventilträgermodulen abschließendes Ventilträgermodul ist, wobei zweckmäßigerweise ein Mündungsmuster der Kanalmündungen des Hybrid-Ventilträgermoduls und alle anderen Mündungsmuster der übrigen Ventilträgermodule untereinander identisch sind. Hierdurch wird erreicht, dass an einem Ende des Ventilträgers ein abschließendes Ventilträgermodul angeordnet ist, bei dem es sich um ein Hybrid-Ventilträgermodul handelt. Durch die Anordnung des Hybrid-Ventilträgermoduls an einem Ende des Ventilträgers ist insbesondere die letzte Bestückungsfläche des Hybrid-Ventilträgers, an der lediglich an einer Seite eine weitere Bestückungsfläche angrenzt, relativ einfach zu Montagezwecken erreichbar, so dass die Montage eines Ventils auf dieser Bestückungsfläche insbesondere auch dann besonders schnell möglich ist, wenn es sich um ein verhältnismäßig kleines Ventil handelt. Auf dem Bestückungsplatz des Hybrid-Ventilträgermoduls, der das von den übrigen Mündungsmustern der Ventilträgermodule abweichende Mündungsmuster aufweist, kann beispielsweise ein Sonderventil montiert werden, das zur Steuerung eines besonders kleinen Fluidvolumenstroms ausgelegt ist.

Es ist zweckmäßig, wenn an den Bestückungsplätzen der Bestückungsflächen der Trägerkörper jeweils ein Ventil der Fluidverteilervorrichtung zur Beeinflussung der Fluidströmung des durch das Ventil-Kanalsystem strömenden Fluides montiert oder montierbar ist. Es ist allerdings in einem Fall, in dem die Anzahl der benötigten Ventile geringer ist als die Anzahl der vorhandenen Bestückungsplätze, auch möglich, dass an einem Bestückungsplatz anstelle eines Ventils eine Abschlussblende angebracht ist, die die Kanalmündungen des Bestückungsplatzes fluiddicht verschließt.

Es ist vorteilhaft, wenn in den Ventilen jeweils mehrere Ventilkanäle ausgebildet sind, die zu einer zur Montage an einem Bestückungsplatz eines Trägerkörpers ausgebildeten Montagefläche des Ventils über ein Mündungsmuster bildende Kanalmündungen ausmünden, wobei das Mündungsmuster der Kanalmündungen der Montagefläche dem Mündungsmuster der Kanalmündungen des jeweils zugeordneten Bestückungsplatzes entspricht.

Bevorzugt ist mindestens ein Hybrid-Ventilträgermodul in der Aufreihungsrichtung schmäler ausgebildet als die nicht als Hybrid-Ventilträgermodul ausgebildeten Standard-Ventilträgermodule. Dadurch lässt sich die Fluidverteilervorrichtung mit kurzer Baulänge verwirklichen.

Es ist vorteilhaft, wenn an jedem Bestückungsplatz der Bestückungsfläche sämtlicher Ventilträgermodule wenigstens zwei zur lösbaren Montage eines Ventils dienende Befestigungslöcher, insbesondere Gewindelöcher, ausgebildet sind, wobei sich die Befestigungslöcher des einen Bestückungsplatzes des Hybrid-Ventilträgermoduls in ihrem in der Aufreihungsrichtung gemessenen Mittenabstand und/oder in ihrem Lochdurchmesser von den Befestigungslöchern des anderen Bestückungsplatzes des Hybrid-Ventilträgermoduls unterscheiden. Zweckmäßigerweise stimmen die Befestigungslöcher der Bestückungsplätze der nicht als Hybrid-Ventilträgermodul ausgebildeten Standard-Ventilträgermodule in ihrem Mittenabstand und Lochdurchmesser mit den Befestigungslöchern des einen der beiden Bestückungsplätze des Hybrid-Ventilträgermoduls überein.

Es ist zweckmäßig, wenn auch jedes zur Montage auf den Bestückungsplätzen der Ventilträgermodule vorgesehene Ventil über Montagelöcher verfügt. Die Befestigungslöcher eines Bestückungsplatzes und die Montagelöcher der Ventile bilden jeweils gleiche Lochmuster, sodass die Befestigungslöcher untereinander und die Montagelöcher untereinander den gleichen Abstand zueinander aufweisen. Dies hat zur Folge, dass im auf den jeweiligen Bestückungsplatz aufgesetzten Zustand eines Ventils die Lochmuster der Befestigungslöcher des Ventils miteinander fluchten, so dass Befestigungsmittel durch die Montagelöcher und die Befestigungslöcher zur Befestigung des Ventils eingebracht werden können. Für den Fall, dass die Befestigungslöcher der Bestückungsplätze als Gewindelöcher ausgebildet sind, können die Befestigungsmittel als Befestigungsschrauben ausgebildet sein.

Nachfolgend wird die Erfindung anhand der beiliegenden Zeichnung erläutert. In dieser zeigen:
- Figur 1: eine bevorzugte Ausführungsform einer Fluidverteilervorrichtung mit einem zwei Standard-Ventilträgermodule und ein Hybrid-Ventilträgermodul aufweisenden Ventilträger, in einer perspektivischen Ansicht, wobei auf den drei Ventilträgermodulen jeweils zwei Ventile montiert sind,
- Figur 2: die in Figur 1 abgebildete Fluidverteilervorrichtung in einer perspektivischen Explosionsdarstellung,
- Figur 3: den in Figur 2 abgebildeten Ventilträger in einer Draufsicht gemäß Pfeil III, wobei zwei Ventilträgermodule partiell aufgebrochen dargestellt sind,

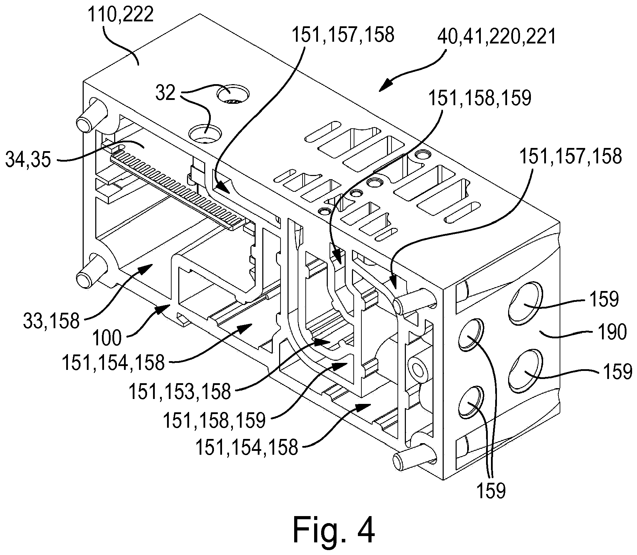

- Figur 4: ein Hybrid-Ventilträgermodul in einer Einzeldarstellung in einer ersten perspektivischen Ansicht,

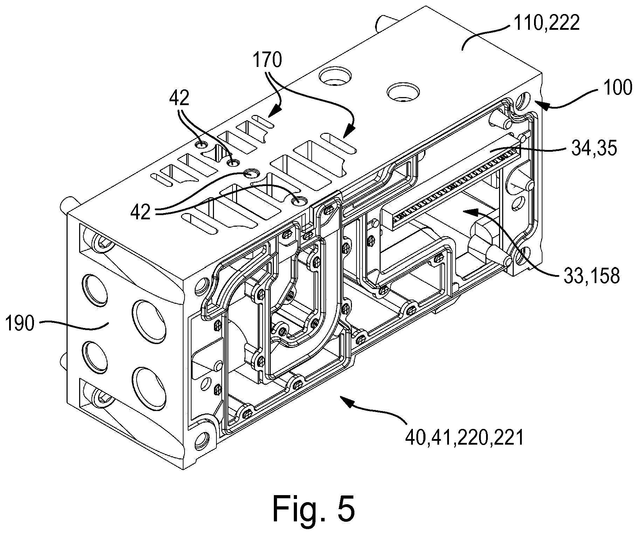

- Figur 5: das Hybrid-Ventilträgermodul aus Figur 4 in einer zweiten perspektivischen Ansicht aus einer im Vergleich zu Figur 4 entgegengesetzten Blickrichtung.

In der Zeichnung ist insgesamt eine Fluidverteilervorrichtung 10 dargestellt, die zur Verteilung von Fluid an Verbrauer dient, die mit der Fluidverteilervorrichtung 10 verbunden sind. Bei den in den Figuren nicht dargestellten Verbrauchern handelt es sich vorzugsweise um Pneumatikvorrichtungen oder Hydraulikvorrichtungen, insbesondere um fluidbetätigte Antriebe. Die Fluidverteilervorrichtung 10 umfasst einen Ventilträger 20, an dem Ventile 30 montiert oder montierbar sind, mit denen sich die Fluidverteilung zu den mit dem Ventilträger 20 verbundenen Verbrauchern steuern lässt.

Der Ventilträger 20 ist eine modular aufgebaute Baugruppe, die sich zumindest aus Ventilträgermodulen 40 und vorzugsweise auch aus Abschlussmodulen 50 zusammensetzt. Die Ventilträgermodule 40 und die Abschlussmodule 50 sind in einer Aufreihungsrichtung 60 aneinander angeordnet und über Modulbefestigungsmittel 70 miteinander verbunden, so dass sie einen in sich starren Ventilträger 20 bilden.

Im Ausführungsbeispiel umfasst der Ventilträger 20 drei Ventilträgermodule 40, die in der Aufreihungsrichtung 60 aneinander angeordnet sind und zwei Abschlussmodule 50, die sich in der Aufreihungsrichtung 60 von beiden Seiten her an die Ventilträgermodule 40 anreihen. Im Ausführungsbeispiel sind die beiden Abschlussmodule 50 zum einen als Anschlussmodul 80 und zum anderen als Steuermodul 90 ausgebildet, die jeweils über Modulbefestigungsmittel 70 mit den Ventilträgermodulen 40 verbunden sind. Bei den Modulbefestigungsmittel 70 handelt es sich beispielsweise um Befestigungsschrauben.

Die in der Aufreihungsrichtung 60 aneinander angereihten Ventilträgermodule 40 verfügen jeweils über einen Trägerkörper 41, der bevorzugt einstückig ausgebildet ist. Der Trägerkörper 41 weist vorzugsweise zwei Anbauflächen 100 auf, die in der Aufreihungsrichtung 60 an zueinander entgegengesetzten Seiten des Trägerkörpers 41 angeordnet sind, wobei die Anbauflächen 100 vorzugsweise parallel zueinander ausgerichtet sind. Die Trägerkörper 41 der Ventilträgermodule 40 können über die Anbauflächen 100 unter Zwischenschaltung von Dichtmitteln in der Aufreihungsrichtung 60 über die Modulbefestigungsmittel 70 miteinander verbunden sein.

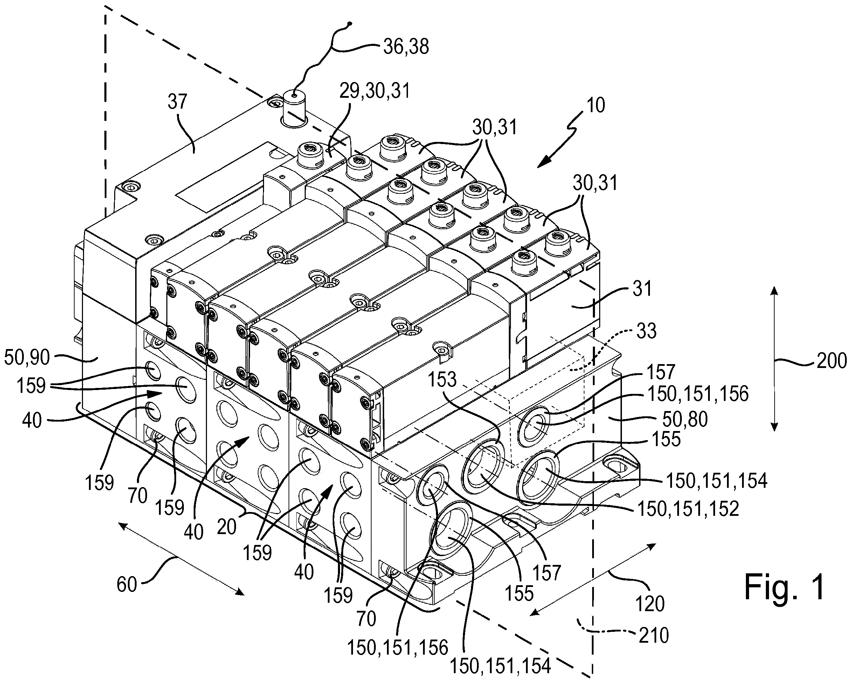

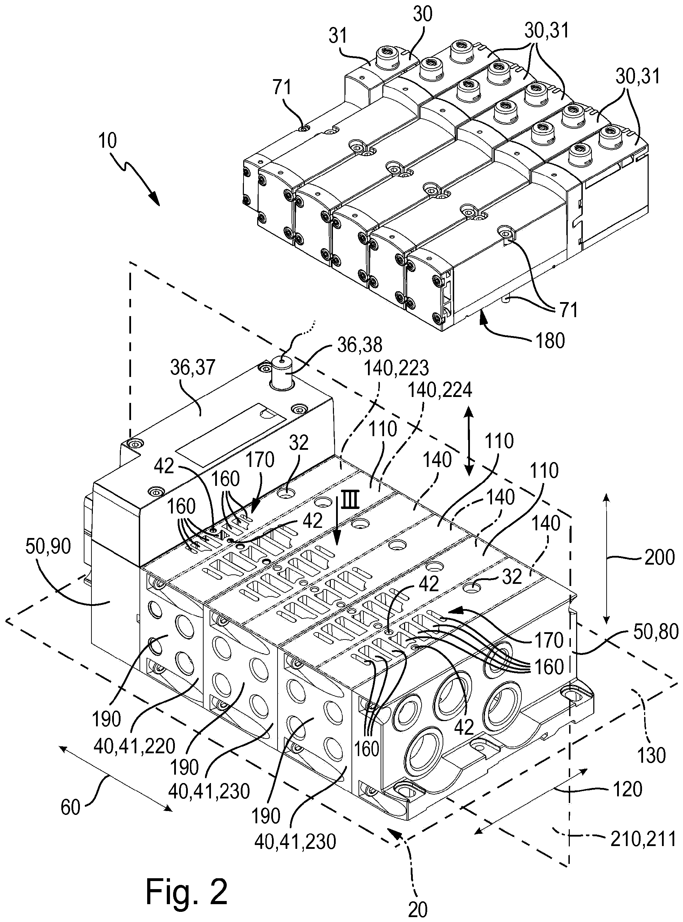

Weiterhin weist jeder Trägerkörper 41 an einer in den Figuren 1 und 2 nach oben zeigenden Oberseite eine Bestückungsfläche 110 auf, die bevorzugt parallel zu einer von der Aufreihungsrichtung 60 und einer senkrecht zu der Aufreihungsrichtung 60 verlaufenden Querrichtung 120 aufgespannten ersten Bezugsebene 130 verläuft. In der Figur 2 ist die erste Bezugsebene 130 durch einen gestrichelten Rahmen angedeutet. Die Bestückungsflächen 110 der einzelnen Trägerkörper 41 weisen vorzugsweise jeweils den gleichen Abstand zu der Bezugsebene 130 auf.

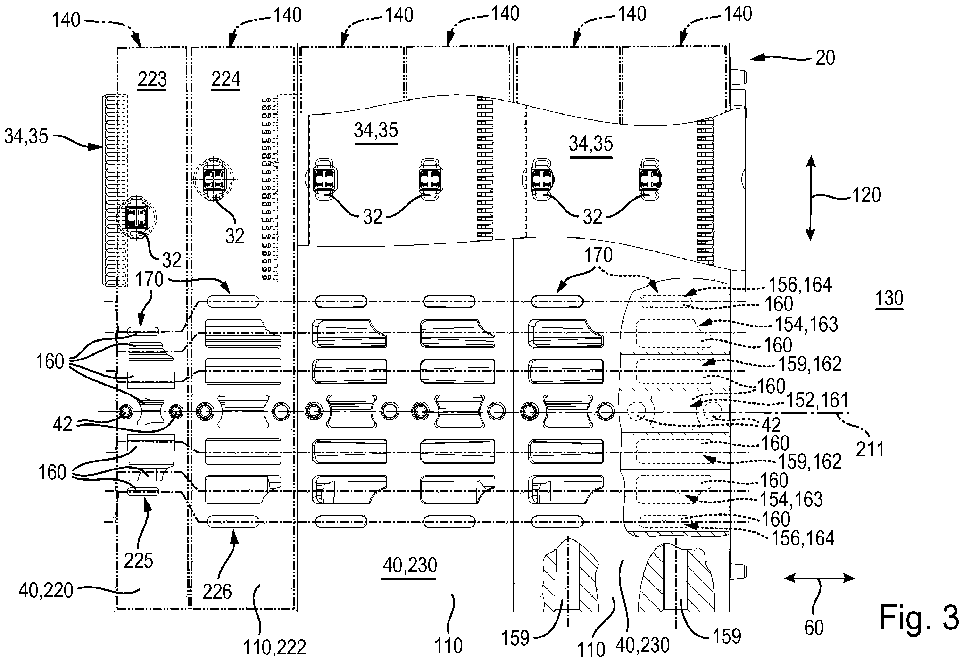

Die Bestückungsfläche 110 des Trägerkörpers 41 jedes Ventilträgermoduls 40 definiert mindestens einen Bestückungsplatz 140, der in den Figuren 2 und 3 durch einen strichdoppelpunktierte Rahmen angedeutet ist. An jedem Bestückungsplatz 140 eines Trägerkörpers 41 eines Ventilträgermoduls 40 kann ein Ventil 30 montiert oder montierbar sein, beispielsweise ein elektrisch betätigbares Pneumatikventil, bei dem es sich vorzugsweise um ein als Schieberventil ausgebildetes Mehrwegventil handelt.

An jedem Bestückungsplatz 140 mündet ein in dem Ventilträger 20 ausgebildetes Ventilträger-Kanalsystem 150 über Kanalmündungen 160 aus, wobei die Kanalmündungen 160 pro Bestückungsplatz 140 ein als Mündungsmuster 170 bezeichnetes Muster definieren. Die an den Bestückungsplätzen 140 vorhandenen Kanalmündungen 160 seien im Folgenden auch als Ventilträger-Kanalmündungen 160 bezeichnet. Das Mündungsmuster 170 der Ventilträger-Kanalmündungen 160 ist beispielsweise durch den Relativabstand der Ventilträger-Kanalmündungen 160 untereinander und/oder durch unterschiedlich große Querschnittsflächen der Ventilträger-Kanalmündungen 160 gekennzeichnet.

In jedem auf einem Bestückungsplatz 140 montierten oder montierbaren Ventil 30 ist ein Kanalsystem ausgebildet, das in den Figuren nicht näher gezeigt ist. Dieses Kanalsystem mündet an einer Montagefläche 180 eines Ventils 30 über Ventil-Kanalmündungen aus, die ein Ventil-Mündungsmuster an der Montagefläche 180 bilden. Mit der Montagefläche 180 voran sind die Ventile 30 an den Bestückungsplätzen 140 montierbar oder montiert.

Das Ventil-Mündungsmuster jedes Ventils 30 ist so ausgebildet, dass es mit dem Mündungsmuster 170 der an mindestens einem der Bestückungsplätze 140 ausmündenden Ventilträger-Kanalmündungen 160 übereinstimmt, sodass die Ventile 30 unter Ausbildung von Fluidverbindungen auf die Bestückungsplätze 140 montiert werden können und Fluid über die Ventilträger-Kanalmündungen 160 und die Ventil-Kanalmündungen strömen kann.

Der Trägerkörper 41 jedes Ventilträgermoduls 40 verfügt weiterhin über mindestens eine als Anschlussfläche 190 bezeichnete Außenfläche, die vorzugsweise parallel zu einer von der Aufreihungsrichtung 60 und einer zu der Aufreihungsrichtung 60 und der Querrichtung 120 jeweils rechtwinkelig stehenden Hochachse 200 aufgespannten zweiten Bezugsebene 210 verläuft. Zweckmäßigerweise weisen alle Anschlussflächen 190 des Ventilträgers 20 den gleichen Abstand zur zweiten Bezugsebene 210 auf, sodass die Anschlussflächen 190 aller Trägerkörper 41 eine einzige Ebene bilden. Die Anschlussfläche 190 könnte auch an der der Bestückungsfläche 110 entgegengesetzten Unterseite des Trägerkörpers 41 ausgebildet sein.

In jedem Trägerkörper 41 des Ventilträgers 20 ist pro Bestückungsplatz 140 mindestens ein individueller Arbeitskanal 159 des Ventilträger-Kanalsystems 150 ausgebildet, der einerseits an mindestens einer Anschlussfläche 190 des Trägerkörpers 41 über eine Arbeitskanalöffnung ausmündet und andererseits über eine das Mündungsmuster 170 mit bildende Ventilträger-Kanalmündung 160 an dem Bestückungsplatz 140 des jeweiligen Trägerkörpers 41 ausmündet.

Beim Ausführungsbeispiel gehen von jedem Bestückungsplatz 140 zwei individuelle Arbeitskanäle 159 aus. Wenn der Trägerkörper 41 gemäß dem Ausführungsbeispiel über zwei Bestückungsplätze verfügt, münden somit an der Anschlussfläche 190 des Trägerkörpers 41 des betreffenden Ventilträgermoduls 40 jeweils vier individuelle Arbeitskanäle 159 über jeweils eine Arbeitskanalöffnung aus.

Das an jedem Bestückungsplatz 140 eines Trägerkörpers 41 über die Ventilträger-Kanalmündungen 160 ausmündende Ventilträger-Kanalsystem 150 mündet weiterhin außen an dem Anschlussmodul 80 aus. Dort definiert es Anschlussöffnungen 153, 155, 157, über die externe Druckquellen und/oder Drucksenken anschließbar sind, die in den Figuren nicht dargestellt sind, sodass das Ventilträger-Kanalsystem 150 mit Fluid versorgbar und von Fluid entsorgbar ist.

Das Ventilträger-Kanalsystem 150 enthält außer den individuellen Arbeitskanälen 159 mindestens einen und bevorzugt mehrere den Ventilträger 20 in der Aufreihungsrichtung 60 durchsetzende Durchgangskanäle 151. Jeder dieser Durchgangskanäle 151 mündet über eine der Ventilträger-Kanalmündungen 160 an jedem Bestückungsplatz 140 aus.

Die Durchgangskanäle 151 enthalten vorzugsweise einen den Ventilträger 20 längs in der Aufreihungsrichtung 60 durchsetzenden Speisekanal 152. Dieser mündet einerseits am Anschlussmodul 80 über eine einen Speiseanschluss bildende Anschlussöffnung 153, über die er an eine externe Druckquelle anschließbar ist, und andererseits über jeweils eine Ventilträger-Kanalmündung 160 an einem Bestückungsplatz 140 eines Trägerkörpers 41 aus.

Das Ventilträger-Kanalsystem 150 verfügt im Ausführungsbeispiel auch über zwei Durchgangskanäle 151, die jeweils einen Entlastungskanal 154 bilden, der einerseits am Anschlussmodul 80 über eine einen Entlastungsanschluss bildende Anschlussöffnung 155 und andererseits an jedem Bestückungsplatz 140 eines Trägerkörpers 41 über jeweils eine Ventilträger-Kanalmündung 160 ausmünden. Über den Entlastungsanschluss ist eine Verbindung zu einer Drucksenke, insbesondere zur Atmosphäre hergestellt.

Das Ventilträger-Kanalsystem 150 verfügt optional auch über mindestens einen als Vorsteuerkanal 156 ausgebildeten Durchgangskanal 151. Im Ausführungsbeispiel sind genau zwei Vorsteuerkanäle 156 vorhanden, die jeweils einerseits am Anschlussmodul 80 über eine einen Vorsteueranschluss bildende Anschlussöffnung 157 ausmünden und andererseits an jedem Bestückungsplatz 140 eines Trägerkörpers 41 über eine der Ventilträger-Kanalmündungen 160 ausmünden.

Vorzugsweise alle Durchgangskanäle 151 des Ventilträger-Kanalsystems 150 setzen sich aus mehreren Durchgangskanalabschnitten 158 zusammen, die jeweils den Trägerkörper 41 eines Ventilträgermoduls 40 von einer Anbaufläche 100 bis zur entgegengesetzt angeordneten anderen Anbaufläche 100 durchsetzen. Im zusammengebauten Zustand des Ventilträgers 20 ergänzen sich die Durchgangskanalabschnitte 158 zu den einzelnen Durchgangskanälen 151.

Die Ventilträger-Kanalmündungen 160 jedes Bestückungsplatzes verteilen sich vorzugsweise spiegelsymmetrisch um die zweite Bezugsebene 210 in der Querrichtung 120.

Jede Ventilträger-Kanalmündung 160 ist so angeordnet und gestaltet, dass sie mit einer Ventil-Kanalmündung eines Ventils 30 fluchtet, wenn sich das Ventil 30 im auf dem Bestückungsplatz 140 des Trägerkörpers 41 montierten Zustand befindet. Dadurch wird erreicht, dass alle zum gleichen Mündungsmuster 170 gehörenden Ventilträger-Kanalmündungen 160 jedes Bestückungsplatzes 140 jedes Trägerkörpers 41 mit den Ventil-Kanalmündungen des Ventil-Mündungsmusters des am Bestückungsplatz 140 montierten Ventils 30 übereinstimmen, sodass Fluid zwischen den Ventilträger-Kanalmündungen 160 und den Ventil-Kanalmündungen überströmen kann.

Die Ventile 30 sind bevorzugt von elektrisch betätigbarer Bauart. Hierzu verfügt jedes Ventil 30 über eine elektrische Betätigungseinrichtung 31, durch die es in unterschiedliche Schaltstellungen bringbar ist, in denen jeweils verschiedene Ventilkanäle des Ventils 30 mit verschiedenen Durchgangskanälen 151 und individuellen Arbeitskanälen 159 des Ventilträger-Kanalsystems 150 in Verbindung stehen. Das heißt, in den unterschiedlichen Schaltstellungen jedes Ventils 30 sind die an dem dem betreffenden Ventil 30 zugeordneten Bestückungsplatz 140 ausmündenden Kanäle des Ventilträger-Kanalsystems 150 in unterschiedlichem Muster miteinander verbunden.

Die elektrische Betätigungseinrichtung 31 jedes Ventils 30 steht über eine an jedem Bestückungsplatz 140 jedes Trägerkörpers 41 angeordnete elektromechanische Schnittstelleneinrichtung 32 mit einem elektrischen Signalübertragungsstrang 34 in Verbindung, der in einem den Ventilträger 20 in der Aufreihungsrichtung 60 durchsetzenden Signalübertragungskanal 33 angeordnet ist. Der Signalübertragungsstrang 34 setzt sich aus einzelnen Strangabschnitten 35 zusammen, die jedem Trägerkörper 41 zugeordnet sind, wobei sich die einzelnen Strangabschnitte 35 im zusammengebauten Zustand des Ventilträgers 20 zum Signalübertragungsstrang 34 ergänzen. Der Signalübertragungsstrang 34 steht einerseits mit jeder elektrischen Betätigungseinrichtung 31 eines Ventils 30 über eine der elektromechanischen Schnittstelleneinrichtungen 32 und andererseits mit einer elektronischen Steuereinrichtung 36 in Verbindung, wobei die Steuereinrichtung 36 vorzugsweise von einem auf dem Steuermodul 90 angeordneten Steuerblock 37 gebildet ist oder unmittelbar in das Steuermodul 90 integriert ist. Der Signalübertragungsstrang 34 ist zur Übertragung von elektrischen Signalen ausgebildet, die die Steuerbefehle zur Vorgabe der Schaltstellungen der einzelnen Ventile 30 bilden und die erforderliche Betriebsspannung liefern. Es ist auch möglich, dass es sich bei der Steuereinrichtung 36 um ein nicht dargestelltes externes übergeordnetes Steuersystem handelt, das vorzugsweise über ein Schnittstellenmittel 38 und den Signalübertragungsstrang 34 mit den elektrischen Betätigungseinrichtungen 31 der Ventile 30 in Verbindung steht, um die Ventile 30 ansteuern zu können.

An jedem Bestückungsplatz 140 sind mit Innengewinden versehene Befestigungslöcher 42 ausgebildet, die in einem Lochmuster angeordnet sind. Weiterhin ist jedes Ventil 30 von Montagelöchern durchsetzt, die an seiner Montagefläche 180 ein weiteres Lochmuster bilden. Die Lochmuster der Bestückungsplätze 140 und der Ventile 30 stimmen überein, sodass im auf einem Befestigungsplatz 140 montierten Zustand eines Ventils 30 dessen Montagelöcher mit den Befestigungslöchern 42 fluchten. Somit kann jedes Ventil 30 mit insbesondere als Befestigungsschrauben ausgebildeten Befestigungsmitteln 71 am zugeordneten Ventilträgermodul 40 befestigt werden, die durch die Montagelöcher hindurchgeführt und in die Befestigungslöcher eingeschraubt werden.

Jedes Mündungsmuster 170 der Bestückungsplätze 140 weist wie erwähnt mehrere Ventilträger-Kanalmündungen 160 auf, von denen jeweils eine auch als Mittenkanalmündung 161 bezeichnet sei, weil sie von den übrigen Ventilträger-Kanalmündungen 160 zu beiden Seiten hin in gleicher Anzahl in der Querrichtung 120 flankiert ist. Beim Ausführungsbeispiel weisen die Mündungsmuster 170 der Bestückungsplätze 140 beispielsweise pro Mündungsmuster 170 insgesamt sieben Ventilträger-Kanalmündungen 160 auf, wobei die Mittenkanalmündung 161 zu jeder Seite hin von drei aufeinanderfolgenden weiteren Ventilträger-Kanalmündungen 160 flankiert ist. Die Mittenkanalmündung 161 jedes Mündungsmusters 170 steht mit dem Speisekanal 152 des Ventilträger-Kanalsystems 150 in Verbindung, sodass durch den Speisekanal 152 hindurch Fluid vom Speiseanschluss 153 bis zu jeder Mittenkanalmündung 161 eines Bestückungsplatzes 140 strömen kann, um von dort zu den auf den Bestückungsplätzen 140 montierbaren oder montierten Ventilen 30 zu strömen.

Die Mittenkanalmündung 161 jedes Bestückungsplatzes 140 ist in der Querrichtung 120 unmittelbar von zwei jeweils als Arbeitskanalmündung 162 bezeichneten Ventilträger-Kanalmündungen 160 flankiert, wobei jede Arbeitskanalmündung 162 zu einem der individuellen Arbeitskanäle 159 gehört.

Weiterhin ist in der Querrichtung 120 auf die beiden Arbeitskanalmündungen 162 folgend jeweils eine weitere, als Entlastungskanalmündung 163 bezeichnete Ventilträger-Kanalmündung 160 angeordnet, die mit einem der Entlastungskanäle 154 kommuniziert.

Beim Ausführungsbeispiel schließt an die beiden Entlastungskanalmündungen 163 in der Querrichtung 120 nach außen auch noch jeweils eine als Vorsteuerkanalmündung 164 bezeichnete Ventilträger-Kanalmündung 160 an, die über die Vorsteuerkanäle 156 mit den Vorsteueranschlüssen 157 des Anschlussmoduls 80 in Verbindung stehen.

Zweckmäßigerweise fallen alle Mittenkanalmündungen 161 der Bestückungsplätze 140 der Trägerkörper 41 mit einer als Mitten-Bezugsebene 211 bezeichneten Bezugsebene zusammen. Die Mitten-Bezugsebene 211 ist durch die Aufreihungsrichtung 60 und die Hochachse 200 aufgespannt und weist einen definierten Abstand zu den Anschlussflächen 190 der Trägerkörper 41 auf. Zweckmäßigerweise ist sie parallel zur zweiten Bezugsebene 210 angeordnet.

Bevorzugt sind die Ventilträger-Kanalmündungen 160 jedes Mündungsmusters 170 symmetrisch bezüglich der Mitten-Bezugsebene 211 angeordnet, insbesondere handelt es sich dabei um eine spiegelsymmetrische Anordnung, wie es beispielsweise in den Figuren 2 und 3 dargestellt ist.

Zweckmäßigerweise fallen die an den Bestückungsplätzen 140 ausgebildeten Befestigungslöcher 42 mit der Mitten-Bezugsebene 211 zusammen, sodass die Befestigungslöcher 42 in der Aufreihungsrichtung 60 miteinander fluchten.

Mindestens ein Ventilträgermodul 40 des Ventilträgers 20 ist als ein Hybrid-Ventilträgermodul 220 ausgebildet, wobei beim Ausführungsbeispiel genau ein Hybrid-Ventilträgermodul 220 vorhanden ist. Die übrigen Ventilträgermodule 40 des Ventilträgers 20 seien zur besseren Unterscheidung jeweils als Standard-Ventilträgermodul 230 bezeichnet.

Das Hybrid-Ventilträgermodul 220 weist einen als Hybrid-Trägerkörper 221 bezeichneten Trägerkörper 41 auf, dessen Bestückungsfläche 140 zur besseren Unterscheidung als Hybrid-Bestückungsfläche 222 bezeichnet sei und zwei in der Aufreihungsrichtung 60 nebeneinander angeordnete Bestückungsplätze 140 definiert, die zur besseren Unterscheidung als erste und zweite Hybrid-Bestückungsplätze 223, 224 bezeichnet seien. Die an den beiden Hybrid-Bestückungsplätzen 223, 224 vorhandenen Mündungsmuster 170 seien als erstes und zweites Hybrid-Mündungsmuster 225, 226 bezeichnet, wobei sich das erste Hybrid-Mündungsmuster 225 von dem zweiten Hybrid-Mündungsmuster 226 unterscheidet.

Beim Ausführungsbeispiel ist der das erste Hybrid-Mündungsmuster 225 aufweisende erste Hybrid-Bestückungsplatz 223 des Hybrid-Ventilträgermoduls 220 in der Aufreihungsrichtung 60 direkt neben dem Steuermodul 90 angeordnet, sodass ein auf dem ersten Hybrid-Bestückungsplatz 223 angeordnetes, als Sonderventil 29 bezeichnetes Ventil 30 direkt an den im Ausführungsbeispiel auf dem Steuermodul 90 angeordneten Steuerblock 37 angrenzt. Das zweite Hybrid-Mündungsmuster 226 des zweiten Hybrid-Bestückungsplatzes 224 ist im Ausführungsbeispiel genauso ausgebildet, wie die übrigen Mündungsmuster 170 der Standard-Ventilträgermodule 230.

Die Ventilträger-Kanalmündungen 160 der beiden Hybrid-Mündungsmuster 225, 226 der beiden Hybrid-Bestückungsplätze 223, 224 unterscheiden sich bevorzugt in ihren Relativpositionen und in ihren Querschnittsflächen voneinander, sodass an den beiden Hybrid-Bestückungsplätzen 223, 224 sich voneinander unterscheidende Ventile 30 montierbar sind. Beispielswiese können sich die Ventilträger-Kanalmündungen 160 auch nur in ihren Relativpositionen oder nur in ihren Querschnittsflächen voneinander unterscheiden.

Exemplarisch ist am ersten Hybrid-Bestückungsplatz 223 das schon erwähnte Sonderventil 29 montierbar, das sich von den anderen Ventilen 30 unterscheidet, insbesondere durch einen unterschiedlichen steuerbaren Fluidvolumenstrom. Im Vergleich zu den übrigen Ventilen 30 der Fluidverteilervorrichtung 10 ist das Sonderventil 29 beim Ausführungsbeispiel vorzugsweise von einer kleineren Baugröße. Auch das erste Hybrid-Mündungsmuster 225 ist im Vergleich zu allen anderen Mündungsmustern 170 daher kleiner ausgebildet, es nimmt also eine kleinere Fläche ein als die anderen Mündungsmuster 170, einschließlich des zweiten Hybrid-Mündungsmusters 226.

Die zum ersten Hybrid-Mündungsmuster 225 gehörenden Ventilträger-Kanalmündungen 160 des ersten Hybrid-Bestückungsplatzes 223 weisen untereinander einen auf die jeweilige geometrische Mitte bezogenen Mittenabstand auf. Beim Ausführungsbeispiel ist der Mittenabstand zwischen den zum ersten Hybrid-Mündungsmuster 225 gehörenden Ventilträger-Kanalmündungen 160 kleiner als der Mittenabstand zwischen den zum zweiten Hybrid-Mündungsmuster 226 gehörenden Ventilträger-Kanalmündungen 160. Dies gilt entsprechend für die nicht abgebildeten Ventil-Kanalmündungen an den Montageflächen 180 der daran zu montierenden bzw. montierten Ventile 30.

Weiterhin stimmt bevorzugt das zweite Hybrid-Mündungsmuster 226 des zweiten Hybrid-Bestückungsplatzes 224 mit den übrigen Mündungsmustern 170 der an das Hybrid-Ventilträgermodul 220 in Aufreihungsrichtung 60 anschließenden Standard-Ventilträgermodule 230 überein. Jedes Standard-Ventilträgermodul 230 verfügt beispielhaft über genau zwei in der Aufreihungsrichtung 60 nebeneinander angeordnete, in ihren Mündungsmustern 170 übereinstimmende Bestückungsplätze 140.

Bevorzugt sind die Ventilträger-Kanalmündungen 160 aller Mündungsmuster 170, das heißt einschließlich des ersten und zweiten Hybrid-Mündungsmusters 225, 226, in symmetrischer Verteilung beidseitig der Mitten-Bezugsebene 211 angeordnet.

Die beiden Hybrid-Bestückungsplätze 223, 224 können in Anpassung an unterschiedliche Baubreiten der darauf zu montierenden Ventile 30 auch in der Aufreihungsrichtung 60 unterschiedlich breit sein, was aus Figur 3 gut zum Ausdruck kommt. Dadurch kann die in der Aufreihungsrichtung 60 gemessene Baubreite des Hybrid-Ventilträgermoduls 220 minimiert werden.

Die beiden Hybrid-Bestückungsplätze 223, 224 verfügen zweckmäßigerweise außer den Hybrid-Mündungsmustern 225, 226 jeweils über eine der oben schon erwähnten elektromechanischen Schnittstelleneinrichtungen 32 und jeweils über zwei der weiter oben auch schon beschriebenen Befestigungslöcher 42.

Die elektromechanische Schnittstelleneinrichtung 32 jedes Bestückungsplatzes 140 jedes Trägerkörpers 41 weist einen definierten Abstand zu der Mitten-Bezugsebene 211 auf. Die elektromechanischen Schnittstelleneinrichtungen 32 der beiden Hybrid-Bestückungsplätze 223, 224 unterschieden sich voneinander durch einen unterschiedlichen Abstand zu der Mitten-Bezugsebene 211. Beim Ausführungsbeispiel ist die elektromechanische Schnittstelleneinrichtung 32 des ersten Hybrid-Bestückungsplatzes 223 näher an der Mitten-Bezugsebene 211 angeordnet, als die elektromechanische Schnittstelleneinrichtung 32 des zweiten Hybrid-Bestückungsplatzes 224 und der weiteren Bestückungsplätze 140, die weiter entfernt von der Mitten-Bezugsebene 211 angeordnet ist.

Die Befestigungslöcher 42 des ersten Hybrid-Bestückungsplatzes 223 fluchten mit den Befestigungslöchern 42 des zweiten Hybrid-Bestückungsplatzes 224 in der Aufreihungsrichtung 60, sodass sie auf einer Linie liegen. Die Befestigungslöcher 42 der Hybrid-Bestückungsplätze 223, 224 weisen untereinander in der Aufreihungsrichtung 60 einen unterschiedlichen Abstand auf, sodass beispielsweise die Befestigungslöcher 42 des ersten Hybrid-Bestückungsplatzes 223 näher beieinander liegen als die Befestigungslöcher 42 des zweiten Hybrid-Bestückungsplatzes 224. Die Befestigungslöcher 42 können sich beispielsweise in ihren in der Aufreihungsrichtung 60 gemessenen Abständen und/oder in ihren Lochdurchmessern voneinander unterscheiden.

Während die an das Hybrid-Ventilträgermodul 220 in der Aufreihungsrichtung 60 anschließenden Standard-Ventilträgermodule 230 gemäß dem bevorzugten Ausführungsbeispiel jeweils über zwei Bestückungsplätze 140 verfügen, ist es auch möglich, dass pro Standard-Ventilträgermodul 230 nur ein Bestückungsplatz 140 oder mehr als zwei Bestückungsplätze 140 ausgebildet sind, sodass insgesamt entweder nur ein oder mehrere Ventile 30 pro Standard-Ventilträgermodul 230 montiert werden können.

Weiterhin stimmen vorzugsweise alle Mündungsmuster 170 der Standard-Ventilträgermodule 230 mit einem der beiden Hybrid-Mündungsmuster 225, 226 des Hybrid-Trägerkörpers 221 des Hybrid-Ventilträgermoduls 220 überein, sodass auf den zugehörigen Bestückungsplätzen 140, 223, 224 jeweils dieselben Ventile 30 angeordnet werden können.

Beim Ausführungsbeispiel ist das Hybrid-Ventilträgermodul 220 am Ende der Reihe von Ventilträgermodulen 40 angeordnet. Dadurch wird die Reihe von Bestückungsplätzen 140 von einem der Hybrid-Bestückungsplätze abgeschlossen. Zweckmäßigerweise schließt sich an das Hybrid-Ventilträgermodul 220 in der Aufreihungsrichtung 60 ein Abschlussmodul 50 an, bei dem es sich beispielsweise um das den Steuerblock 37 tragende Steuermodul 90 handelt.

Vorzugsweise sind bei einer Reihenendanordnung des Hybrid-Ventilträgermoduls 220 die beiden Hybrid-Bestückungsplätze 223, 224 so ausgebildet und angeordnet, dass das zu dem sich anschließenden Standard-Ventilträgermodul 230 unmittelbar benachbarte Hybrid-Mündungsmuster 226 mit den Mündungsmustern 170 aller Standard-Ventilträgermodule 230 übereinstimmt. Diese Anordnung hat beispielsweise den Vorteil, dass der die Reihe von Bestückungsplätzen 140 abschließende Hybrid-Bestückungsplatz 223 für die Montage des sich von den anderen Ventilen 30 unterscheidenden und beispielsweise kleineren Sonderventils 29 sehr gut zugänglich ist. Eine umgekehrte Anordnungsreihenfolge der beiden Hybrid-Bestückungsplätze 223, 224 ist aber ebenfalls möglich.

Es ist allerdings auch eine Anordnung möglich, bei der das Hybrid-Ventilträgermodul 220 nicht das Ende der Reihe von Ventilträgermodulen 40 bildet, sondern zwischen zwei Standard-Ventilträgermodulen 230 angeordnet ist.

## Patentansprüche

1. Fluidverteilervorrichtung, mit einem modular aufgebauten Ventilträger (20), der von einem von Fluid durchströmbaren Ventilträger-Kanalsystem (150) durchsetzt ist und über mehrere Ventilträgermodule (40) verfügt, die in einer Aufreihungsrichtung (60) aneinandergereiht sind und jeweils über einen Trägerkörper (41) verfügen, der eine Bestückungsfläche (110) aufweist, die mindestens einen Bestückungsplatz (140) zur Bestückung mit einem Ventil (30) definiert, wobei das Ventilträger-Kanalsystem (150) mit jeweils mehreren zur Verbindung mit einem Ventil (30) vorgesehenen Kanalmündungen (160) an jedem Bestückungsplatz (140) zur Bestückungsfläche (110) ausmündet und mehrere den Ventilträger (20) axial durchsetzende Durchgangskanäle (151) aufweist, die jeweils über eine Kanalmündung (160) an jedem Bestückungsplatz (140, 223, 224) jedes Trägerkörpers (41, 221) ausmünden, wobei die Kanalmündungen (160) an jedem Bestückungsplatz (140) unter Bildung eines Mündungsmusters (170) verteilt angeordnet sind, **dadurch gekennzeichnet, dass** mindestens ein Ventilträgermodul (40) ein Hybrid-Ventilträgermodul (220) ist, dessen Trägerkörper (41) einen Hybrid-Trägerkörper (221) bildet, dessen Bestückungsfläche (222) zwei in der Aufreihungsrichtung (60) nebeneinander angeordnete Bestückungsplätze (223, 224) definiert, die sich im Mündungsmuster (170, 225, 226) der an ihnen angeordneten Kanalmündungen (160) voneinander unterscheiden.

2. Fluidverteilervorrichtung nach Anspruch 1, **dadurch gekennzeichnet, dass** sich die Kanalmündungen (160) der Mündungsmuster (170, 225, 226) der beiden Bestückungsplätze (223, 224) des Hybrid-Trägerkörpers (221) in ihren Relativpositionen und/oder in ihren Querschnittsflächen voneinander unterscheiden, derart, dass die beiden Bestückungsplätze (223, 224) mit unterschiedlichen Ventilen (29, 30) bestückbar sind.

3. Fluidverteilervorrichtung nach Anspruch 1 oder 2, **dadurch gekennzeichnet, dass** der Mittenabstand zwischen den zum gleichen Mündungsmuster (170, 225, 226) gehörenden Kanalmündungen (160) des einen Bestückungsplatzes (224) des Hybrid-Ventilträgermoduls (220) größer ist als der Mittenabstand zwischen den zum gleichen Mündungsmuster (170, 225, 226) gehörenden Kanalmündungen (160) des anderen Bestückungsplatzes (223) des Hybrid-Ventilträgermoduls (220).

4. Fluidverteilervorrichtung nach einem der Ansprüche 1 bis 3, **dadurch gekennzeichnet, dass** das Mündungsmuster (170, 225, 226) der Kanalmündungen (160) eines Bestückungsplatzes (223, 224) des Hybrid-Trägerkörpers (221) mit mindestens einem Mündungsmuster (170) der Kanalmündungen (160) des Trägerkörpers (41) mindestens eines am Hybrid-Ventilträgermodul (220) in der Aufreihungsrichtung (60) angereihten weiteren Ventilträgermoduls (40) übereinstimmt, wobei die Übereinstimmung zweckmäßigerweise mit sämtlichen Mündungsmustern (170) aller weiteren Ventilträgermodule (40) gegeben ist.

5. Fluidverteilervorrichtung nach einem der Ansprüche 1 bis 4, **dadurch gekennzeichnet, dass** der Trägerkörper (41) mindestens eines Ventilträgermoduls (40) über zwei in der Aufreihungsrichtung (60) nebeneinander angeordnete in ihren Mündungsmustern (170) übereinstimmende Bestückungsplätze (140) verfügt.

6. Fluidverteilervorrichtung nach einem der Ansprüche 1 bis 5, **dadurch gekennzeichnet, dass** die Kanalmündungen (160) der Mündungsmuster (170, 225, 226) sämtlicher Bestückungsplätze (140, 223, 224) einschließlich derjenigen des mindestens einen Hybrid-Trägerkörpers (221) in symmetrischer Verteilung beidseits einer Bezugsebene (211) angeordnet sind, die entlang der Aufreihungsrichtung (60) und entlang einer orthogonal zu den Bestückungsflächen (110, 222) orientierten Hochachse (200) verläuft.

7. Fluidverteilervorrichtung nach einem der Ansprüche 1 bis 6, **dadurch gekennzeichnet, dass** jeder Bestückungsplatz (140, 223, 224) der Trägerkörper (41, 221) über eine elektromechanische Schnittstelleneinrichtung (32) verfügt, die zur Verbindung mit einer elektrischen Betätigungseinrichtung (31) eines am zugeordneten Bestückungsplatz (140, 223, 224) montierten oder montierbaren Ventils (29, 30) vorgesehen ist, wobei zweckmäßigerweise die elektromechanischen Schnittstelleneinrichtungen (32) der beiden Bestückungsplätze (223, 224) des Hybrid-Trägerkörpers (221) einen unterschiedlichen Abstand zu einer die Mündungsmuster (225, 226) dieser beiden Bestückungsplätze (223, 224) durchsetzenden Bezugsebene (211) aufweisen, die entlang der Aufreihungsrichtung (60) und entlang einer orthogonal zu den Bestückungsflächen (140, 223, 224) orientierten Hochachse (200) verläuft.

8. Fluidverteilervorrichtung nach einem der Ansprüche 1 bis 7, **dadurch gekennzeichnet, dass** das Ventilträger-Kanalsystem (150) pro Bestückungsplatz (140, 223, 224) jedes Ventilträgermoduls (40, 221) mindestens einen individuellen Arbeitskanal (159) aufweist, der einerseits an einem Bestückungsplatz (140, 223, 224) des zugeordneten Trägerkörpers (41, 221) zur Bestückungsfläche (110, 222) und andererseits zu einer abseits der Bestückungsfläche (110, 222) des Trägerkörpers (41, 221) außen am Trägerkörper (41, 221) angeordneten Anschlussfläche (190) ausmündet.

9. Fluidverteilervorrichtung nach einem der Ansprüche 1 bis 8, **dadurch gekennzeichnet, dass** der Ventilträger (20) genau ein Hybrid-Ventilträgermodul (221) aufweist, das ein die Reihe von Ventilträgermodulen (40, 220) abschließendes Ventilträgermodul (40, 220) ist, wobei zweckmäßigerweise ein Mündungsmuster (225, 226) der Kanalmündungen (160) des Hybrid-Ventilträgermoduls (220) und alle anderen Mündungsmuster (170) der übrigen Ventilträgermodule (40) identisch sind.

10. Fluidverteilervorrichtung nach einem der Ansprüche 1 bis 9, **dadurch gekennzeichnet, dass** an den Bestückungsplätzen (140, 223, 224) der Bestückungsflächen (110, 222) der Trägerkörper (41, 221) jeweils ein Ventil (29, 30) der Fluidverteilervorrichtung (10) zur Beeinflussung der Fluidströmung des durch das Ventil-Kanalsystem (150) strömenden Fluids montiert oder montierbar ist.

11. Fluidverteilervorrichtung nach Anspruch 10, **dadurch gekennzeichnet, dass** in den Ventilen (29, 30) jeweils mehrere Ventilkanäle ausgebildet sind, die zu einer zur Montage an einem Bestückungsplatz (140, 223, 224) eines Trägerkörpers (41, 221) ausgebildeten Montagefläche (180) des Ventils (29, 30) über ein Mündungsmuster bildende Kanalmündungen ausmünden, wobei das Mündungsmuster der Kanalmündungen der Montagefläche (180) dem Mündungsmuster (170, 225, 226) der Kanalmündungen (160) des jeweils zugeordneten Bestückungsplatzes (140) entspricht.

12. Fluidverteilervorrichtung nach einem der Ansprüche 1 bis 11, **dadurch gekennzeichnet, dass** mindestens ein Hybrid-Ventilträgermodul (220) in der Aufreihungsrichtung (60) schmäler ist als die nicht als Hybrid-Ventilträgermodul (220) ausgebildeten Ventilträgermodule (40).

13. Fluidverteilervorrichtung nach einem der Ansprüche 1 bis 12, **dadurch gekennzeichnet, dass** an jedem Bestückungsplatz (140, 223, 224) der Bestückungsfläche (110, 222) sämtlicher Ventilträgermodule (40, 220) wenigstens zwei zur lösbaren Montage eines Ventils (29, 30) dienende Befestigungslöcher (42), insbesondere Gewindelöcher, ausgebildet sind, wobei sich die Befestigungslöcher (42) des einen Bestückungsplatzes (223) des Hybrid-Ventilträgermoduls (220) in ihrem in der Aufreihungsrichtung (60) gemessenen Mittenabstand und/oder in ihrem Lochdurchmesser von den Befestigungslöchern (42) des anderen Bestückungsplatzes (224) des Hybrid-Ventilträgermoduls (220) unterschieden, und wobei zweckmäßigerweise die Befestigungslöcher (42) der Bestückungsplätze (140) der nicht als Hybrid-Ventilträgermodul (220) ausgebildeten Ventilträgermodule (40) in ihrem Mittenabstand und Lochdurchmesser von den Befestigungslöchern (42) des einen der beiden Bestückungsplätze (223, 224) des Hybrid-Ventilträgermoduls (220) übereinstimmen.

## Claims

1. Fluid distribution apparatus with a valve support (20) of modular construction, through which passes a valve support passage system (150) through which fluid can flow, and which comprises a plurality of valve support modules (40), which are lined up in a line-up direction (60) and each of which has a support body (41) having a mounting surface (110) defining at least one mounting location (140) for mounting a valve (30), wherein the valve support passage system (150) terminates at each mounting location (140) towards the mounting surface (110) with several passage orifices (160) each provided for connection to a valve (3) and has several through-passages (151), which pass axially through the valve support (20) and each of which terminates via a passage orifice (160) at each mounting location (140, 223, 224) of each support body (41, 221), wherein the passage orifices (160) are distributed at each mounting location (140) while forming an orifice pattern (170), **characterised in that** at least one valve support module (40) is a hybrid valve support module (220), the support body (41) of which forms a hybrid support body (221), the mounting surface (222) of which defines two mounting locations (223, 224), which are arranged adjacent to each other in the line-up direction (60) and which differ from each other in the orifice pattern (170, 225, 226) of the passage orifices (160) located thereon.

2. Fluid distribution apparatus according to claim 1, **characterised in that** the passage orifices (160) of the orifice patterns (170, 225, 226) of the two mounting locations (223, 224) of the hybrid support body (221) differ from one another in their relative positions and/or in their cross-sectional areas in such a way that the two mounting locations (223, 224) can be fitted with different valves (29, 30).

3. Fluid distribution apparatus according to claim 1 or 2, **characterised in that** the centre distance between the channel orifices (160) - belonging to the same orifice pattern (170, 225, 226) - of the one mounting location (224) of the hybrid valve support module (220) is greater than the centre distance between the channel orifices (160) - belonging to the same orifice pattern (170, 225, 226) - of the other mounting location (222) of the hybrid valve support module (220).

4. Fluid distribution apparatus according to any of claims 1 to 3, **characterised in that** the orifice pattern (170, 225, 226) of the passage orifices (160) of a mounting location (140, 223, 224) of the hybrid support body (221) corresponds to at least one orifice pattern (170) of the passage orifices (160) of the support body (41) of at least one further valve support module (40) positioned on the hybrid valve support module (220) in the line-up direction (60), wherein expediently all orifice patterns (170) of all further valve support modules (40) correspond in this way.

5. Fluid distribution apparatus according to any of claims 1 to 4, **characterised in that** the support body (41) of at least one valve support module (40) has two mounting locations (140) arranged side by side in the line-up direction (60) and corresponding in their orifice patterns (170).

6. Fluid distribution apparatus according to any of claims 1 to 5, **characterised in that** the passage orifices (160) of the orifice patterns (170, 225, 226) of all mounting locations (140, 223, 224) including those of the at least one hybrid support body (221) are arranged with symmetric distribution on both sides of a reference plane (211), which extends along the line-up direction (60) and along a vertical axis (200) oriented orthogonally to the mounting surfaces (110, 222).

7. Fluid distribution apparatus according to any of claims 1 to 6, **characterised in that** each mounting location (140, 223, 224) of the support bodies (41, 221) has an electromechanical interface device (32) provided for connection to an electric actuating device (31) of a valve (29, 30) mounted or mountable on the associated mounting location (140, 223, 224), wherein the electromechanical interface devices (32) of the two mounting locations (223, 224) of the hybrid support body (221) expediently have a different distance from a reference plane (211), which passes through the orifice patterns (225, 226) of said two mounting locations (223, 224) and extends along the line-up direction (60) and along a vertical axis (200) oriented orthogonally to the mounting surfaces (140, 223, 224).

8. Fluid distribution apparatus according to any of claims 1 to 7, **characterised in that** the valve support passage system (150) has for each mounting location (140, 223, 224) of each valve support module (40, 221) at least one individual working passage (159), which terminates on the one hand at a mounting location (140, 223, 224) of the associated support body (41, 221) towards the mounting surface (110, 222) and on the other hand towards a connecting surface (190) located away from the mounting surface (110, 222) of the support body (41, 221) on the outside of the support body (41,221).

9. Fluid distribution apparatus according to any of claims 1 to 8, **characterised in that** the valve support (20) has precisely one hybrid valve support module (221), which is a valve support module (40, 221) ending the row of valve support modules (40, 221), wherein expediently an orifice pattern (225, 226) of the passage orifices (160) of the hybrid valve support module (220) and all other orifice patterns (170) of the other valve support modules (40) are identical.

10. Fluid distribution apparatus according to any of claims 1 to 9, **characterised in that** one valve (20, 30) each of the fluid distribution apparatus (10) is or can be mounted at the mounting locations (140, 223, 224) of the mounting surfaces (110, 222) of the support bodies (41, 221) for influencing the fluid flow of the fluid flowing through the valve passage system (150).

11. Fluid distribution apparatus according to claim 10, **characterised in that** in each of the valves (29, 30) there are formed several valve passages which terminate via passage orifices forming an orifice pattern at a mounting surface (180) of the valve (29, 30) designed for mounting at a mounting location (140, 223, 224) of a support body (41, 221), wherein the orifice pattern of the passage orifices of the mounting surface (180) corresponds to the orifice pattern (170, 225, 226) of the passage orifices (160) of the respectively assigned mounting location (140)

12. Fluid distribution apparatus according to any of claims 1 to 11, **characterised in that** at least one hybrid valve support module (220) is narrower in the line-up direction (60) than the valve support modules (40) not designed as a hybrid valve support module (220).

13. Fluid distribution apparatus according to any of claims 1 to 12, **characterised in that** at least two mounting holes (42), in particular threaded holes, used for the releasable mounting of a valve (29, 30) are formed at each mounting location (140, 223, 224) of the mounting surface (110, 222) of all valve support modules (40, 220), wherein the mounting holes (42) of the one mounting location (223) of the hybrid valve support module (220) differ in their centre distance as measured in the line-up direction (60) and/or in their hole diameter from the mounting holes (42) of the other mounting location (224) of the hybrid valve support module (220), and wherein expediently the mounting holes (42) of the valve support modules (40) not designed as a hybrid valve support module (220) correspond in their centre distance and hole diameter to the mounting holes (42) of the one of the two mounting locations (223, 224) of the hybrid valve support module (220).

## Revendications

1. Dispositif de distribution de fluide, avec un support de soupape (20) à structure modulaire, qui est traversé par un système de canal de support de soupape (150) pouvant être traversé par du fluide et dispose de plusieurs modules de support de soupape (40), qui sont alignés dans une direction d'alignement (60) et disposent respectivement d'un corps de support (41), qui présente une surface d'équipement (110), qui définit au moins un emplacement d'équipement (140) destiné à être équipé d'une soupape (30), dans lequel le système de canal de support de soupape (150) débouche avec respectivement plusieurs embouchures de canal (160) prévues pour être reliées à une soupape (30) au niveau de chaque emplacement d'équipement (140) vers la surface d'équipement (110) et présente plusieurs canaux de passage (151) traversant de manière axiale le support de soupape (20), qui débouchent respectivement par l'intermédiaire d'une embouchure de canal (160) au niveau de chaque emplacement d'équipement (140, 223, 224) de chaque corps de support (41, 221), dans lequel les embouchures de canal (160) sont disposées de manière répartie au niveau de chaque emplacement d'équipement (140) en formant un motif d'embouchure (170), **caractérisé en ce qu'**au moins un module de support de soupape (40) est un module de support de soupape hybride (220), dont le corps de support (41) forme un corps de support hybride (221), dont la surface d'équipement (222) définit deux emplacements d'équipement (223, 224) disposés côte à côte dans la direction d'alignement (60), qui se distinguent l'un de l'autre par le motif d'embouchure (170, 225, 226) des embouchures de canal (160) disposées au niveau de ceux-ci.

2. Dispositif de distribution de fluide selon la revendication 1, **caractérisé en ce que** les embouchures de canal (160) des motifs d'embouchure (170, 225, 226) des deux emplacements d'équipement (223, 224) du corps de support hybride (221) se distinguent les unes des autres par leurs positions relatives et/ou par leurs surfaces de section transversale de telle manière que les deux emplacements d'équipement (223, 224) peuvent être équipés de soupapes (29, 30) différentes.

3. Dispositif de distribution de fluide selon la revendication 1 ou 2, **caractérisé en ce que** l'écartement central entre les embouchures de canal (160) faisant partie du même motif d'embouchure (170, 225, 226) d'un emplacement d'équipement (224) du module de support de soupape hybride (220) est plus grand que l'écartement central entre les embouchures de canal (160), faisant partie du même motif d'embouchure (170, 225, 226), de l'autre emplacement d'équipement (223) du module de support de soupape hybride (220).

4. Dispositif de distribution de fluide selon l'une quelconque des revendications 1 à 3, **caractérisé en ce que** le motif d'embouchure (170, 225, 226) des embouchures de canal (160) d'un emplacement d'équipement (223, 224) du corps de support hybride (221) coïncide avec au moins un motif d'embouchure (170) des embouchures de canal (160) du corps de support (41) d'au moins un autre module de support de soupape (40) aligné dans la direction d'alignement (60) au niveau du module de support de soupape hybride (220), dans lequel la coïncidence de manière opportune avec tous les motifs d'embouchure (170) de tous les autres modules de support de soupape (40) est de mise.

5. Dispositif de distribution de fluide selon l'une quelconque des revendications 1 à 4, **caractérisé en ce que** le corps de support (41) d'au moins un module de support de soupape (40) dispose de deux emplacements d'équipement (140) coïncidant dans leurs motifs d'embouchure (170), disposés côte à côte dans la direction d'alignement (60).

6. Dispositif de distribution de fluide selon l'une quelconque des revendications 1 à 5, **caractérisé en ce que** les embouchures de canal (160) des motifs d'embouchure (170, 225, 226) de tous les emplacements d'équipement (140, 223, 224) y compris de celles de l'au moins un corps de support hybride (221) sont disposées selon une répartition symétrique de part et d'autre d'un plan de référence (211), qui s'étend le long de la direction d'alignement (60) et le long d'un axe vertical (200) orienté de manière orthogonale par rapport aux surfaces d'équipement (110, 222).

7. Dispositif de distribution de fluide selon l'une quelconque des revendications 1 à 6, **caractérisé en ce que** chaque emplacement d'équipement (140, 223, 224) des corps de support (41, 221) dispose d'un système d'interface (32) électromécanique, qui est prévu pour être relié à un système d'actionnement (31) électrique d'une soupape (29, 30) montée ou pouvant être montée au niveau de l'emplacement d'équipement (140, 223, 224) associé, dans lequel de manière appropriée les systèmes d'interface (32) électromécaniques des deux emplacements d'équipement (223, 224) du corps de support hybride (221) présentent un écartement différent par rapport à un plan de référence (211) traversant les motifs d'embouchure (225, 226) desdits deux emplacements d'équipement (223, 224), qui s'étend le long de la direction d'alignement (60) et le long d'un axe vertical (200) orienté de manière orthogonale par rapport aux surfaces d'équipement (140, 223, 224).

8. Dispositif de distribution de fluide selon l'une quelconque des revendications 1 à 7, **caractérisé en ce que** le système de canal de support de soupape (150) présente par emplacement d'équipement (140, 223, 224) de chaque module de support de soupape (40, 221) au moins un canal de travail (159) individuel, qui débouche d'une part au niveau d'un emplacement d'équipement (140, 223, 224) du corps de support (41, 221) associé vers la surface d'équipement (110, 222) et d'autre part vers une surface de raccordement (190) disposée à l'écart de la surface d'équipement (110, 222) du corps de support (41, 221) côté extérieur au niveau du corps de support (41, 221).

9. Dispositif de distribution de fluide selon l'une quelconque des revendications 1 à 8, **caractérisé en ce que** le support de soupape (20) présente précisément un module de support de soupape hybride (221), qui est un module de support de soupape (40, 220) terminant la rangée de modules de support de soupape (40, 220), dans lequel de manière opportune un motif d'embouchure (225, 226) des embouchures de canal (160) du module de support de soupape hybride (220) et tous les autres motifs d'embouchure (170) des modules de support de soupape (40) restants sont identiques.

10. Dispositif de distribution de fluide selon l'une quelconque des revendications 1 à 9, **caractérisé en ce que** respectivement une soupape (29, 30) du dispositif de distribution de fluide (10) est montée ou peut être montée pour influencer l'écoulement de fluide du fluide circulant à travers le système de canal de soupape (150) au niveau des emplacements d'équipement (140, 223, 224) des surfaces d'équipement (110, 222) des corps de support (41, 221).

11. Dispositif de distribution de fluide selon la revendication 10, **caractérisé en ce que** sont réalisés dans les soupapes (29, 30) respectivement plusieurs canaux de soupape, qui débouchent vers une surface de montage (180), réalisée pour être montée au niveau d'un emplacement d'équipement (140, 223, 224) d'un corps de support (41, 221), de la soupape (29, 30) par l'intermédiaire d'embouchures de canal formant un motif d'embouchure, dans lequel le motif d'embouchure des embouchures de canal de la surface de montage (180) correspond au motif d'embouchure (170, 225, 226) des embouchures de canal (160) de l'emplacement d'équipement (140) respectivement associé.

12. Dispositif de distribution de fluide selon l'une quelconque des revendications 1 à 11, **caractérisé en ce qu'**au moins un module de support de soupape hybride (220) est plus étroit dans la direction d'alignement (60) que les modules de support de soupape (40) non réalisés sous la forme d'un module de support de soupape hybride (220).

13. Dispositif de distribution de fluide selon l'une quelconque des revendications 1 à 12, **caractérisé en ce qu'**au moins deux trous de fixation (42), en particulier des trous filetés, servant au montage amovible d'une soupape (29, 30) sont réalisés au niveau de chaque emplacement d'équipement (140, 223, 224) de la surface d'équipement (110, 222) de tous les modules de support de soupape (40, 220), dans lequel les trous de fixation (42) d'un emplacement d'équipement (223) du module de support de soupape hybride (220) se distinguent par leur écartement central mesuré dans la direction d'alignement (60) et/ou par leur diamètre de trou des trous de fixation (42) de l'autre emplacement d'équipement (224) du module de support de soupape hybride (220), et dans lequel de manière opportune les trous de fixation (42) des emplacements d'équipement (140) des modules de support de soupape (40) non réalisés sous la forme de module de support de soupape hybride (220) se distinguent par leur écartement central et leur diamètre de trou des trous de fixation (42) d'un des deux emplacements d'équipement (223, 224) du module de support de soupape hybride (220).
